# EUROPEAN PATENT SPECIFICATION

(11) **EP 4 446 696 B1**
(45) Date of publication and mention of the grant of the patent: **08.10.2025**
(21) Application number: 24160140.0
(22) Date of filing: 28.02.2024
(51) Int. Cl.: G01B 11/25, B64F 5/10, G01B 11/26

(54) **REAL-TIME DETERMINING OF REQUIRED CHARACTERISTICS FOR JUNCTION OF HOLLOW COMPONENTS DURING AN ALIGNMENT PROCESS**
ECHTZEITBESTIMMUNG DER ERFORDERLICHEN EIGENSCHAFTEN FÜR DIE VERBINDUNG VON HOHLEN KOMPONENTEN WÄHREND EINES AUSRICHTUNGSPROZESSES
DÉTERMINATION EN TEMPS RÉEL DE CARACTÉRISTIQUES REQUISES POUR LA JONCTION DE COMPOSANTS CREUX PENDANT UN PROCESSUS D'ALIGNEMENT

(30) Priority: 13.04.2023 DE 102023109275
(43) Date of publication of application: 16.10.2024
(73) Proprietor: Airbus Operations GmbH, 21129 Hamburg (DE); Airbus Operations Ltd., Filton, Bristol BS99 7AR (GB)
(72) Inventor: SCHRIEVER, Henning, 21129 Hamburg (DE); GORR, Eugen, 21129 Hamburg (DE); GELTINK, Rob-Gerrit, 21129 Hamburg (DE); FORSTER, Kevin, Bristol BS99 7AR (GB)
(74) Representative: LKGLOBAL Lorenz & Kopf Patentanwalt Attorney at Law PartG mbB

(56) References cited:
- EP-B1- 2 979 810
- US-A1- 2012 130 528
- US-A1- 2015 356 236
- US-A1- 2017 247 122

## Description

### Technical Field

The present invention relates to a method and system for real-time determining required characteristics for junction of at least two hollow components during an alignment process.

### Background

Joining two hollow parts that are at least partly dimensionally unstable can be a challenging task that requires precision in every aspect of the process. Dimensional instability refers to the tendency of materials to change their dimensions when exposed to different environmental factors such as temperature, humidity, and pressure. This instability makes it necessary to achieve a precise and stable joint between two hollow parts.

Precision is essential in ensuring a tight fit between the parts. The instability of the parts can lead to slight variations in their dimensions, making it difficult to achieve a precise fit. Gaps or misalignments need to be avoided to compromise the integrity of the joint. Additionally, the precise alignment and stabilization of the hollow parts during the joining process are crucial to achieving a successful joint.

The selection of the appropriate joining method also requires precision. Common methods for joining hollow parts include adhesives, welding, and mechanical fasteners. However, the suitability of each method depends on the precision of the parts and the compatibility of the joining materials.

Finally, the long-term precision of the joint must be considered. This is particularly important if the joined parts are critical components of a larger system or product, where precision is essential for optimal performance.

In conclusion, joining two hollow parts that are partly dimensionally unstable requires a high level of precision in the selection of materials, joining methods, and long-term stability considerations to ensure a precise and reliable joint.

One reason why precision in measuring the relative position of two hollow parts to be joined is important to ensure a proper fit between the components. Therefore, precise measurement and alignment of the two components is necessary to achieve a tight and secure fit, which ensures the proper functioning and reliability of the assembly.

In the prior art, US 2015/0356236 A1 discloses a method and apparatus for aligning segments. US 2017/0247122 A1 discloses a fuselage manufacturing system.

### Summary of the invention

It is therefore an object to increase the precision in determining required characteristics for junction of at least two hollow components during an alignment process.

This object is achieved by means of the subjects of the independent claims. Illustrative embodiments will be found in the dependent claims and the following description.

According to one aspect, a method for real-time determining required characteristics for junction of at least two hollow components defining at least one joining area between each of the at least two hollow components during an alignment process is provided. The measuring of the at least one joining area is executed in a single measuring step and relative from the inside of a first of the at least two hollow components. The method comprises the following steps. In a first step at least two hollow components are provided, wherein the at least two hollow components are adapted to be joined and wherein the at least two hollow components are at least partially dimensionally unstable. In a second step a scanning device is provided, wherein the scanning device is adapted to contactless scan the at least two hollow components in a single measuring step. In a third step the scanning device is arranged in a rigid manner inside of a first hollow component of the at least two hollow components in line of sight of the at least one joining area. In a fourth step the at least one joining area is scanned in a single measuring step to receive scan data to determine required characteristics for junction of the at least two hollow components. In a last step the scan data and the corresponding required characteristics for junction of the at least two hollow components are outputted.

In other words, this approach presents a real-time method for determining the required characteristics for joining at least two partially dimensionally unstable hollow components during alignment. The method involves using a scanning device to measure the joining area in a single step, relative from the inside of the first hollow component. The steps include providing the hollow components, using a contactless scanning device to scan the components in one step, rigidly placing the scanner inside the first component in line with the joining area, scanning the joining area to gather data for determining the necessary joining characteristics, and finally outputting the scan data and corresponding joining characteristics.

Real-time refers to a system or process that responds to inputs or events in a timely manner, typically within a fraction of a second or less. In other words, real-time systems operate in a time-critical environment where data processing or feedback is required immediately or within a specified time frame to ensure the proper functioning of the system.

The term "hollow" refers to an object or structure that has a space or cavity inside, with an opening or openings that allow access to the inside of the object. A hollow object is typically lightweight and may be made from materials such as plastic, metal, or glass. Hollow objects are often used in various applications such as construction and engineering, where their lightweight and space-saving design makes them useful for a variety of purposes. Some examples of hollow objects include tubes, pipes, and fuselages.

A joining area is a section or region where two or more parts, components, or objects are connected or fastened together to form a single entity. The joining area can take various forms depending on the specific application or design, such as a weld, adhesive bond, mechanical fastener, or other types of joining techniques. The purpose of a joining area is to ensure that the components are held together securely and form a functional unit that can perform a specific function or task. The quality and strength of the joining area are critical to the overall performance of the joined components, and various factors such as the materials used, the type of joining method employed, and the design of the joining area itself can affect the durability and reliability of the final product.

A scanning device is a device that is designed to capture digital images or data from an object or a physical document. Scanning devices can take various forms, including flatbed scanners, handheld scanners, and 3D scanners, among others. Scanning devices typically use light or laser beams to read the surface of the object and convert the information into a digital format that can be saved on a computer or other digital storage medium. Scanning devices are widely used in various industries and applications, such as in engineering for 3D modeling.

In the context of measuring with a scanning device from one of two hollow components, the line of sight refers to the path traced by the scanning device between the position of the scanning device and the target point or feature within the opposite hollow component.

For example, if a scanning device is being used to measure the diameter of a pipe from the inside, the line of sight would be the imaginary straight line or path traced by the scanning device between the position of the scanning device inside the pipe and the target point on the opposite wall of the pipe.

The line of sight is critical in this context because it determines the accuracy and precision of the measurement. To ensure accurate measurements, it is important to carefully align the scanning device and optimize the line of sight to minimize any obstructions or deviations. This can be achieved through careful positioning of the scanning device, as well as using specialized tools and techniques to compensate for any distortions or irregularities in the target surface.

A single measuring step refers to a process of obtaining a complete set of measurements or data from an object or a system using a single operation or scan. In other words, a single measuring step involves collecting all the necessary information required for a particular purpose with a single instrument or device. For instance, in the context of a scanning device, a single measuring step may involve capturing all the necessary data from an object or a component in a single scan without the need for additional scanning operations. This can save time and reduce the risk of errors or inaccuracies that may occur if multiple measurements or scans are needed to collect the required data. A single measuring step can be particularly important in real-time applications or situations where time is critical, and quick and accurate data acquisition is necessary.

Rigid manner refers to a state or condition in which an object or device is firmly fixed or secured in a particular position or orientation and is not subject to movement or flexing. In other words, an object or device that is placed or arranged in a rigid manner is held in place with little or no flexibility, vibration or movement. The purpose of rigidly fixing an object or device in a particular position is typically to ensure accuracy, stability, and consistency in its operation or function. For instance, in the context of a scanning device, the device may be arranged in a rigid manner inside a hollow component to ensure that it remains stable and accurate while capturing data from the object being scanned. Similarly, in mechanical or engineering applications, components may need to be secured in a rigid manner to prevent unwanted movement or flexing that could compromise their structural integrity or function.

According to one embodiment, however not claimed as such, the scanning device comprises a jig configured to gather the scan data in different orientations for different axis of the at least two hollow components.

A jig for a scanning device is a specialized tool or fixture that is designed to guide, hold, or position a workpiece, which in this case would be the hollow component being scanned. The purpose of the jig is to ensure that the scanning device is accurately positioned relative to the workpiece so that it can capture precise and consistent scan data. The jig may be adapted to hold the scanning device in a particular orientation or position and may incorporate features such as guides, clamps, or supports to ensure that the scanning device remains stable and does not move during the scanning process. The jig may also include features that allow for precise alignment of the scanning device, such as mounting points or reference markers.

According to one embodiment, however not claimed as such, the scanning device is configured to enable a flexible orientation.

A scanning device configured to enable a flexible orientation is a device adapted to capture accurate and precise data from an object or surface by enabling a user to orient the scanning device in a variety of positions and angles. This allows for the scanning device to be adapted to a range of different surfaces, shapes, and geometries. A scanning device with a flexible orientation may have a range of features, such as a pivoting head or flexible arm, that enable the scanning device to be positioned at various angles and orientations relative to the object being scanned. The scanning device may also include software or other features that enable the user to manipulate the scan data to compensate for variations in orientation or position. Scanning devices with flexible orientations are commonly used in a variety of industries, including manufacturing, engineering, among others, where the ability to capture accurate and precise data from complex or irregular surfaces is critical.

According to one embodiment, the scanning device is configured to enable a 360° scan.

A scanning device configured to enable a 360° scan is a device that is capable of capturing accurate and precise data from all sides of an object or surface, resulting in a full 360° representation of the scanned area. This type of scanning device may have a range of features, such as multiple scanning sensors or a rotating platform, that enable it to capture data from all sides of the object or surface. Scanning devices with 360° scanning capabilities are commonly used in a variety of industries, including manufacturing, architecture, and cultural heritage preservation, among others, where the ability to capture a complete and detailed representation of an object or surface is critical.

According to one embodiment, the required characteristics are at least one of radial gap, relative rotation, straightness, steps, misalignment, shape and thickness.

When joining two hollow components, there are several required characteristics that need to be considered in order to ensure a precise and reliable connection. These characteristics can vary depending on the specific components being joined, but may include radial gap, relative rotation, straightness, steps, misalignment, shape, and thickness.

The radial gap refers to the space between the two components where they are intended to join. This gap must be within a certain range in order to ensure that the components fit together properly and that there is no excess space that could compromise the strength or stability of the joint.

Relative rotation refers to the orientation of the components in relation to one another. This characteristic is particularly important when the components are cylindrical.

Straightness is another important characteristic, particularly when the joint is intended to be linear. The components must be straight and aligned properly in order to ensure a stable and precise connection.

Steps refer to variations in the thickness of the components. These can be problematic if they prevent the components from fitting together properly, or if they create an uneven surface that could compromise the stability of the joint.

Misalignment occurs when the two components are not aligned properly, which can also compromise the stability of the joint.

Finally, the shape and thickness of the components must be carefully considered in order to ensure that they are compatible and that the joint will be able to withstand the forces and stresses it will be subjected to. These required characteristics are all important factors that must be carefully assessed and measured in order to ensure a successful joint between two hollow components.

According to one embodiment, the scanning device is at least one of a rotation laser, a line laser, an inclination laser or laser radar.

There are various types of scanning devices that can be used to measure the required characteristics for the joint of at least two hollow components. Some of the most commonly used scanning devices include lidars, rotation lasers, line lasers, inclination lasers, and laser radars.

A rotation laser emits a laser beam that rotates around an axis, allowing for the measurement of the characteristics of the components in a 360-degree scan. This type of scanning device is particularly useful for measuring relative rotation between the components.

Line lasers emit a straight laser beam that can be used to measure the straightness of the components or the distance between them. This type of scanning device is often used to measure radial gap or steps in the components.

Inclination lasers emit a laser beam at a specific angle, allowing for the measurement of the angle between the components. This type of scanning device is useful for measuring the alignment of the components.

Laser radars use a combination of lasers and radar technology to create a 3D image of the components, allowing for a more comprehensive assessment of their characteristics. This type of scanning device is particularly useful for measuring the shape and thickness of the components.

Each of these scanning devices has its own advantages and disadvantages, and the choice of which device to use will depend on the specific characteristics that need to be measured and the nature of the components being joined. Ultimately, the use of a scanning device is essential for ensuring that the required characteristics are accurately measured and that the joint between the hollow components is precise and reliable.

According to one embodiment, 3D-Data of at least one hollow component is provided and taken into account before outputting the scan data.

In the method for determining required characteristics for the junction of at least two hollow components, 3D-data of at least one of the hollow components is provided and taken into account before outputting the scan data. This means that the scanning device used in the method not only measures the joining area, but also takes into account the overall shape and dimensions of the hollow components.

By incorporating the 3D-data, the method can provide more precise and accurate measurements, which in turn leads to better alignment and junction of the hollow components. For example, if one of the hollow components has a non-uniform shape, the scanning device can adjust its measurements accordingly to ensure a proper fit with the other hollow component.

Moreover, the 3D-data can also be used to identify any potential issues with the junction of the hollow components before the actual junction takes place. This allows for adjustments to be made in advance to ensure a successful junction.

Overall, the use of 3D-data in conjunction with the scanning device provides a more comprehensive and precise approach to determining the required characteristics for junction of the hollow components. Typical components for using respective 3D-Data are buttstraps and stringers of a fuselage of an aircraft.

According to one embodiment, the at least two hollow components are fuselage parts of an aircraft.

The method for determining required characteristics for junction of at least two hollow components can be applied to a wide range of industries and applications. One such application is in the aerospace industry, where the method can be used to join together fuselage parts of an aircraft.

In aircraft manufacturing, the fuselage is typically made up of several hollow components that need to be joined together with a high degree of precision and accuracy. These components may be made of various materials such as aluminum, composite materials or titanium.

The method can be particularly useful when joining hollow components that are at least partially dimensionally unstable. This is because the scanning device can provide real-time measurements during the alignment process to ensure that the required characteristics for junction, such as radial gap, relative rotation, straightness, steps, misalignment, shape and thickness, are met.

The use of a jig for the scanning device and the incorporation of 3D-data can further enhance the precision and accuracy of the method. This is especially important in the aerospace industry, where safety is of utmost importance and even small deviations can have significant consequences.

Overall, the method for determining required characteristics for junction of at least two hollow components is a valuable tool for the aerospace industry, particularly in the manufacturing of aircraft fuselage parts.

According to another aspect, a system for real-time determining required characteristics for junction of at least two hollow components defining at least one joining area between each of the at least two hollow components, by measuring at least one joining area in a single measuring step and relative from the inside of a first of the at least two components. The system comprises at least two hollow components that are at least partially dimensionally unstable. The system further comprises a scanning device, wherein the scanning device is arranged in a rigid manner inside of a first hollow component of the at least two hollow components, wherein the scanning device is adapted to scan at least one joining area in a single measuring step to receive scan data to determine required characteristics for junction, and wherein the scanning device is adapted to output the scan data and the corresponding required characteristics for junction the at least two hollow components.

According to one embodiment, the at least two hollow components are fuselage parts of an aircraft.

### Brief description of the figures

Fig. 1 shows a flowchart of a method for real-time determining required characteristics for junction of at least two hollow components; and
Fig. 2 shows a schematic axial view of a system for real-time determining required characteristics for junction; and
Fig. 3 shows a schematic radial view of a system for real-time determining required characteristics for junction; and
Fig. 4 shows a section of a schematic radial view of a system for real-time determining required characteristics for junction; and
Fig. 5 shows another section of a schematic radial view of a system for real-time determining required characteristics for junction; and
Fig. 6 shows a scanning device with a flexible orientation; and
Fig. 7 shows an aircraft.

### Detailed description

The illustrations in the figures are schematic and not to scale. If the same reference signs are used in different figures in the following description of the figures, they designate identical or similar elements. However, identical or similar elements can also be designated by different reference symbols.

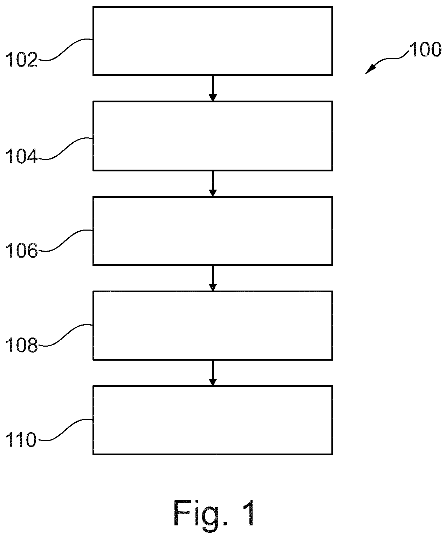

Fig.1 shows a flowchart of a method 100 for real-time determining required characteristics for junction of at least two hollow components 10, 12. The at least two hollow components 10, 12 define at least one joining area 14 between each of the at least two hollow components 10, 12 during an alignment process, by measuring the at least one joining area 14 in a single measuring step and relative from the inside of a first 12 of the at least two hollow components 10, 12. The method 100 comprises the following steps.

In a first step 102 at least two hollow components 10, 12 are provided, wherein the at least two hollow components 10, 12 are adapted to be joined and wherein the at least two hollow components 10, 12 are at least partially dimensionally unstable.

In a second step 104 a scanning device 16 is provided, wherein the scanning device 16 is adapted to contactless scan the at least two hollow components 10, 12 in a single measuring step.

In a third step 106 the scanning device 16 is arranged in a rigid manner inside of the first hollow component 10 of the at least two hollow components 10, 12 in line of sight of the at least one joining area 14.

In a fourth step 108 the at least one joining area 14 is scanned in a single measuring step to receive scan data to determine required characteristics for junction of the at least two hollow components 10, 12.

In a last step 110 the scan data and the corresponding required characteristics for junction the at least two hollow components 10, 12 are outputted.

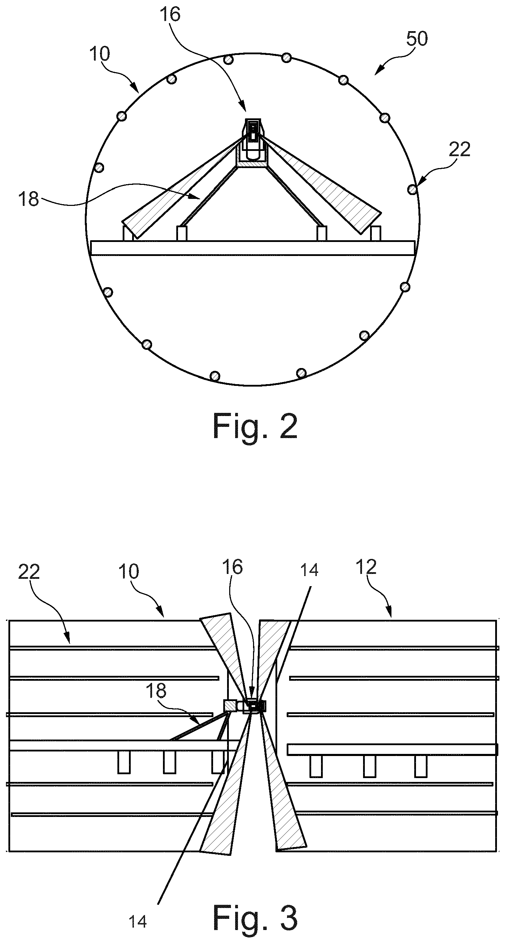

Fig. 2 shows a schematic axial view of a system 50 for real-time determining required characteristics for junction. The system 50 comprises a first 10 and a second 12 (not shown) hollow component, defining at least one joining area 14 (not shown) between each of the at least two hollow components 10, 12. The at least one joining area 14 is measured in a single measuring step and relative from the inside of the first 10 hollow component. The two hollow components 10, 12 are at least partially dimensionally unstable and define fuselage parts of an aircraft 80.

The system 50 further comprises a scanning device 16, wherein the scanning device 16 is arranged in a rigid manner inside of the first 10 hollow component. The scanning device 16 is adapted to scan the at least one joining area 14 in a single measuring step to receive scan data to determine required characteristics for junction, and the scanning device 16 is further adapted to output the scan data and the corresponding required characteristics for junction of the at least two hollow components 10, 12. Further, a set of stringers 22 is shown, wherein the stringers are arranged in an equidistant manner in a circumferential direction along the first component 10. Stringers 22 are structural members in an aircraft fuselage that run longitudinally along the length of the fuselage. They are critical components that help distribute the loads and stresses experienced during flight throughout the fuselage structure.

To ensure the structural integrity and performance of an aircraft 80, it is therefore crucial to carefully align and maintain the stringers 22 within the fuselage.

In Fig. 3, a schematic axial view is presented to illustrate system 50, which is adapted to determine required characteristics for junction in real-time. The system 50 consists of a first hollow component 10 and a second hollow component 12, defining at least one joining area 14 between them. By measuring the joining area 14 in a single step from the inside of the first hollow component 10, the system 50 can determine the required characteristics for junction. The two hollow components 10, 12 are at least partially dimensionally unstable and form parts of an aircraft fuselage 80.

The system 50 also includes a scanning device 16, which is rigidly arranged inside the first hollow component 10. The scanning device 16 is capable of scanning the joining area 14 in a single measuring step to acquire scan data necessary for determining the required characteristics for junction. Moreover, the scanning device 16 can output the scan data and corresponding required characteristics for junction of the two hollow components 10, 12. The system 50 is particularly suitable for real-time determination of required characteristics, ensuring that the two hollow components 10, 12 are joined correctly.

Additionally, Fig. 3 shows a set of stringers 22, arranged in an equidistant manner in a circumferential direction along the first component 10. These stringers 22 provide support to the structure and enhance its stability.

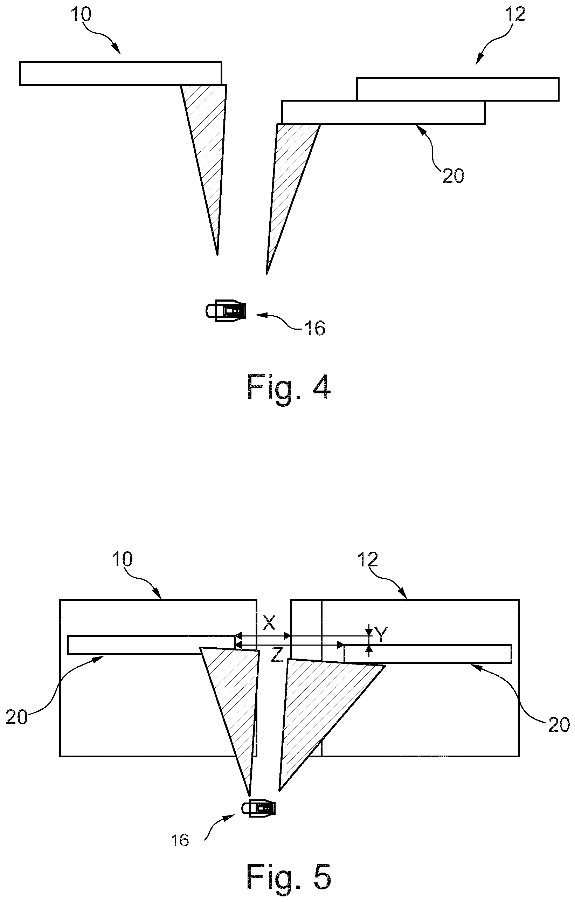

Fig. 4 shows another schematic radial view of a system 50 for real-time determining required characteristics for junction of two hollow components 10, 12. The system 50 for measuring the two hollow components 10, 12 with a scanning device 16 is adapted to ensure efficient and accurate measurements. The system 50 utilizes the scanning device 16 arranged within the first hollow component 10 and further takes 3D data of a buttstrap 20 on the second component 12 into account to align the scanning device 16.

A software for data processing analyzes the data obtained by the scanning device 16 to obtain measurements of the internal surfaces of both components 10, 12. The software can be programmed to identify any defects, deviations, or irregularities in the components' surfaces, and provide detailed reports on the components' quality.

The system's ability to take into account the 3D data of the buttstrap 20 helps to improve the accuracy of the measurements, ensuring that the hollow components 10, 12 fit and function as intended.

Fig. 5 shows a section of a schematic radial view of the system 50 for real-time determining required characteristics for junction. The system 50 is adapted to take into account various factors, including radial gap X, relative rotation Y, straightness, steps, and misalignment Z, to ensure the accurate and precise measurement of the components 10, 12. By considering these factors, the system 50 can provide a comprehensive analysis of the components' dimensions and detect any deviations from their desired specifications.

The radial gap X refers to the space between the two hollow components 10, 12 that are meant to be joined, such as the two hollow components 10, 12 in an aircraft fuselage. The system takes into account the radial gap X to ensure that the components are joined correctly and that there is no excessive gap or interference between them.

Relative rotation refers to the angular difference Y between the two hollow components 10, 12 that are meant to be joined. The system 50 accounts for this factor to ensure that the hollow components 10, 12 are aligned correctly and that there is no twisting or misalignment between them. This is of high relevance for example for aligning the stringers 22 of an aircraft.

Straightness refers to the deviation from a straight line or plane. The system 50 takes into account the straightness of the components to ensure that they are not bent or warped and that they meet the desired specifications.

Steps refer to the presence of sudden changes in the surface profile of the components. The system 50 accounts for these steps to ensure that they do not affect the measurement accuracy.

Misalignment Z refers to the improper positioning of the components. The system 50 takes into account misalignment to ensure that the components are positioned correctly and that they are aligned as per the desired specifications.

**In** summary, by taking into account these factors, the system 50 can ensure the accurate and precise measurement of components, allowing for proper alignment and assembly, and ensuring the quality of the final product.

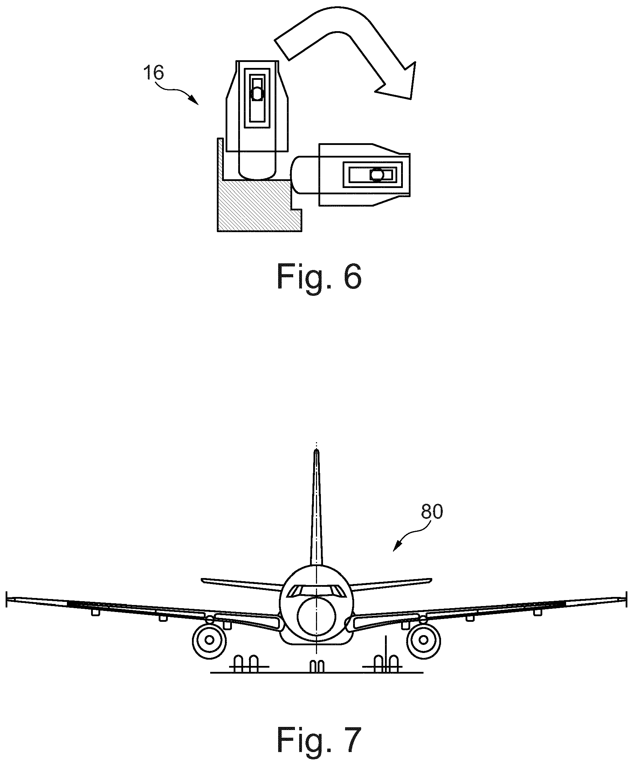

Fig. 6 shows a scanning device 16 with a flexible orientation. A scanning device 16 with a flexible orientation has several advantages over a fixed orientation device.

Firstly, a flexible scanning device can adapt to different geometries and shapes of the components being measured, which is especially useful for irregular or complex-shaped objects. The flexibility of the scanning device 16 allows it to reach areas that may be difficult to access, providing a more complete and accurate measurement.

Secondly, a flexible scanning device 16 can increase productivity and efficiency by reducing the need for manual repositioning of the device during the measurement process. Another advantage of a scanning device 16 with a flexible orientation is the ability to scan from different angles and perspectives, which can provide a more comprehensive view of the components being measured. Further, a flexible scanning device 16 can also be more cost-effective compared to multiple fixed orientation devices. By having a single scanning device 16 that can adjust its position and orientation, there is no need for multiple specialized devices, reducing both capital and operating expenses.

Overall, the advantages of a scanning device 16 with a flexible orientation include increased flexibility, productivity, accuracy, and cost-effectiveness.

Fig. 7 shows an aircraft 80. An aircraft 80 mounted with a system 50 that uses a scanning device 16 to measure the junction characteristics of its hollow components 10, 12 comprises several advantages.

The system 50 provides real-time measurements of the joining areas 14 of the components 10, 12, which allows for identification of any irregularities. This information can be used to identify and address any issues before they become more serious, ensuring the safety and reliability of the aircraft 80.

Further, the system 50 can improve the efficiency of maintenance and repair activities. By identifying specific areas that require attention, maintenance and repair tasks can be targeted more precisely, reducing the time and cost associated with general inspections and maintenance.

Hence, the accuracy of the measurements provided by the scanning device 16 ensures that any repairs or replacements are carried out with precision. This can result in improved performance and a longer lifespan of the aircraft 80, as well as reducing the risk of further damage or malfunctions.

The use of a scanning device 16 can also reduce the need for manual inspection and measurements, which can be time-consuming and cumbersome. This can increase productivity and accuracy, while also reducing the workload for maintenance and inspection personnel.

Finally, the data collected by the system 50 can be used for analysis and optimization purposes. By analyzing trends and patterns in the data, potential areas for improvement or optimization can be identified. This can result in increased efficiency, reduced fuel consumption, and a more cost-effective operation of the aircraft.

Overall, the advantages of an aircraft 80 mounted with a system 50 that uses a scanning device 16 to real-time measure the junction characteristics of its hollow components 10, 12 include increased safety, efficiency, accuracy, and cost-effectiveness, making it a valuable tool in the aviation industry.

### Reference Signs

- 10: First hollow component
- 12: Second hollow component
- 14: Joining area
- 16: Scanning device
- 18: Jig
- 20: Buttstrap
- 22: Stringer
- 50: System for real-time determining required characteristics for junction
- 80: Aircraft
- 100: Method for real-time determining required characteristics for junction
- 102: Providing at least two hollow components
- 104: Providing a scanning device
- 106: Arranging the scanning device
- 108: Scanning the at least one joining area in a single measuring step
- 110: Output the scan data and the corresponding required characteristics

## Claims

1. A method (100) for real-time determining required characteristics for junction of at least two hollow components (10, 12) defining at least one joining area (14) between each of the at least two hollow components (10, 12) during an alignment process, by measuring the at least one joining area (14) in a single measuring step and relative from the inside of a first (12) of the at least two hollow components (10, 12), comprising the following steps:
Providing (102) at least two hollow components (10, 12), wherein the at least two hollow components (10, 12) are adapted to be joined and wherein the at least two hollow components (10, 12) are at least partially dimensionally unstable,
Providing (104) a scanning device (16), wherein the scanning device (16) is adapted to contactless scan the at least two hollow components (10, 12) in a single measuring step, **characterised by**
Arranging (106) the scanning device (16) in a rigid manner inside of the first hollow component (10) of the at least two hollow components (10, 12) in line of sight of the at least one joining area (14),
Scanning (108) the at least one joining area (14) in a single measuring step to receive scan data to determine required characteristics for junction of the at least two hollow components (10, 12),
Output (110) the scan data and the corresponding required characteristics for junction the at least two hollow components (10, 12).

2. The method (100) according to claim 1,
wherein the scanning device (16) comprises a jig (18) configured to gather the scan data in different orientations for different axis of the at least two hollow components (10, 12).

3. The method (100) according to claim 2,
wherein the scanning device (16) is configured to enable a flexible orientation.

4. The method (100) according to claim 3,
wherein the scanning device (16) is configured to enable a 360° scan.

5. The method (100) according to one of the preceding claims,
wherein the required characteristics are at least one of radial gap, relative rotation, straightness, steps, misalignment, shape and thickness.

6. The method (100) according to one of the preceding claims,
wherein the scanning device is at least one of a rotation laser, a line laser, an inclination laser or laser radar.

7. The method (100) according to one of the preceding claims,
wherein 3D-Data of at least one of the at least two hollow components (10, 12) is provided and taken into account before outputting the scan data.

8. The method (100) according to one of the preceding claims,
wherein the at least two hollow components are fuselage parts of an aircraft (80).

9. A system (50) for real-time determining required characteristics for junction of at least two hollow components (10, 12) defining at least one joining area (14) between each of the at least two hollow components (10, 12), by measuring the at least one joining area (14) in a single measuring step and relative from the inside of a first (10) of the at least two hollow components (10, 12), comprising:
at least two hollow components (10, 12) that are at least partially dimensionally unstable, **characterised by**
a scanning device (16), wherein the scanning device (16) is arranged in a rigid manner inside of a first (10) hollow component of the at least two hollow components (10, 12), wherein the scanning device (16) is adapted to scan the at least one joining area (14) in a single measuring step to receive scan data to determine required characteristics for junction, and
wherein the scanning device (16) is adapted to output the scan data and the corresponding required characteristics for junction of the at least two hollow components (10, 12).

10. The system according to claim 9,
wherein the at least two hollow components (10, 12) are fuselage parts of an aircraft (80).

## Patentansprüche

1. Verfahren (100) zur Echtzeit-Bestimmung von erforderlichen Eigenschaften für die Verbindung von mindestens zwei hohlen Bauteilen (10, 12), die mindestens einen Verbindungsbereich (14) zwischen jedem der mindestens zwei hohlen Bauteile (10, 12) während eines Ausrichtungsprozesses definieren, durch Messen des mindestens einen Verbindungsbereichs (14) in einem einzigen Messschritt und relativ von der Innenseite eines ersten (12) der mindestens zwei hohlen Bauteile (10, 12), umfassend die folgenden Schritte:
Bereitstellen (102) von mindestens zwei hohlen Bauteilen (10, 12), wobei die mindestens zwei hohlen Bauteile (10, 12) angepasst sind, um verbunden zu werden, und wobei die mindestens zwei hohlen Bauteile (10, 12) mindestens teilweise forminstabil sind,
Bereitstellen (104) einer Abtastvorrichtung (16), wobei die Abtastvorrichtung (16) angepasst ist, die mindestens zwei hohlen Bauteile (10, 12) in einem einzigen Messschritt berührungslos abzutasten,
**gekennzeichnet durch**
Anordnen (106) der Abtastvorrichtung (16) in einer starren Weise innerhalb des ersten hohlen Bauteils (10) der mindestens zwei hohlen Bauteile (10, 12) in Sichtlinie des mindestens einen Verbindungsbereichs (14),
Abtasten (108) des mindestens einen Verbindungsbereichs (14) in einem einzigen Messschritt, um Abtastdaten zu empfangen, um erforderliche Eigenschaften für die Verbindung der mindestens zwei hohlen Bauteile (10, 12) zu bestimmen,
Ausgeben (110) der Abtastdaten und der entsprechenden erforderlichen Eigenschaften für die Verbindung der mindestens zwei hohlen Bauteile (10, 12).

2. Verfahren (100) nach Anspruch 1,
wobei die Abtastvorrichtung (16) eine Vorrichtung (18) umfasst, die konfiguriert ist, die Abtastdaten in verschiedenen Ausrichtungen für verschiedene Achsen der mindestens zwei hohlen Bauteile (10, 12) zu sammeln.

3. Verfahren (100) nach Anspruch 2,
wobei die Abtastvorrichtung (16) konfiguriert ist, eine flexible Ausrichtung zu ermöglichen.

4. Verfahren (100) nach Anspruch 3,
wobei die Abtastvorrichtung (16) konfiguriert ist, eine 360°-Abtastung zu ermöglichen.

5. Verfahren (100) nach einem der vorhergehenden Ansprüche,
wobei die erforderlichen Eigenschaften mindestens eines von radialem Spalt, relativer Drehung, Geradheit, Stufen, Fehlausrichtung, Form und Dicke sind.

6. Verfahren (100) nach einem der vorhergehenden Ansprüche,
wobei die Abtastvorrichtung mindestens eines von einem Rotationslaser, einem Linienlaser, einem Neigungslaser oder einem Laserradar ist.

7. Verfahren (100) nach einem der vorhergehenden Ansprüche,
wobei 3D-Daten von mindestens einem der mindestens zwei hohlen Bauteile (10, 12) bereitgestellt und vor dem Ausgeben der Abtastdaten berücksichtigt werden.

8. Verfahren (100) nach einem der vorhergehenden Ansprüche,
wobei die mindestens zwei hohlen Bauteile Rumpfteile eines Flugzeugs (80) sind.

9. System (50) zur Echtzeit-Bestimmung von erforderlichen Eigenschaften für die Verbindung von mindestens zwei hohlen Bauteilen (10, 12), die mindestens einen Verbindungsbereich (14) zwischen jedem der mindestens zwei hohlen Bauteile (10, 12) definieren, durch Messen des mindestens einen Verbindungsbereichs (14) in einem einzigen Messschritt und relativ von der Innenseite eines ersten (10) der mindestens zwei hohlen Bauteile (10, 12), umfassend:
mindestens zwei hohle Bauteile (10, 12), die mindestens teilweise forminstabil sind,
**gekennzeichnet durch**
eine Abtastvorrichtung (16), wobei die Abtastvorrichtung (16) in einer starren Weise innerhalb eines ersten (10) hohlen Bauteils der mindestens zwei hohlen Bauteile (10, 12) angeordnet ist,
wobei die Abtastvorrichtung (16) angepasst ist, um den mindestens einen Verbindungsbereich (14) in einem einzigen Messschritt abzutasten, um Abtastdaten zu empfangen, um erforderliche Eigenschaften für die Verbindung zu bestimmen, und
wobei die Abtastvorrichtung (16) angepasst ist, um die Abtastdaten und die entsprechenden erforderlichen Eigenschaften für die Verbindung der mindestens zwei hohlen Bauteile (10, 12) auszugeben.

10. System nach Anspruch 9,
wobei die mindestens zwei hohlen Bauteile (10, 12) Rumpfteile eines Flugzeugs (80) sind.

## Revendications

1. Procédé (100) pour déterminer en temps réel des caractéristiques requises pour la jonction d'au moins deux composants creux (10, 12) définissant au moins une zone de jonction (14) entre chacun des au moins deux composants creux (10, 12) pendant un processus d'alignement, en mesurant l'au moins une zone de jonction (14) dans une seule étape de mesure et relativement depuis l'intérieur d'un premier (12) des au moins deux composants creux (10, 12), comprenant les étapes suivantes:
fournir (102) au moins deux composants creux (10, 12), lesdits au moins deux composants creux (10, 12) étant adaptés pour être assemblés et lesdits au moins deux composants creux (10, 12) étant au moins partiellement dimensionnellement instables,
fournir (104) un dispositif de balayage (16), le dispositif de balayage (16) étant adapté pour balayer sans contact les au moins deux composants creux (10, 12) dans une seule étape de mesure,
**caractérisé par**
arranger (106) le dispositif de balayage (16) d'une manière rigide à l'intérieur du premier composant creux (10) des au moins deux composants creux (10, 12) en ligne de visée de l'au moins une zone de jonction (14),
balayer (108) l'au moins une zone de jonction (14) dans une seule étape de mesure pour recevoir des données de balayage afin de déterminer des caractéristiques requises pour la jonction des au moins deux composants creux (10, 12),
sortir (110) les données de balayage et des caractéristiques requises correspondantes pour la jonction des au moins deux composants creux (10, 12).

2. Procédé (100) selon la revendication 1,
dans lequel le dispositif de balayage (16) comprend un dispositif (18) configuré pour rassembler les données de balayage dans différentes orientations pour différents axes des au moins deux composants creux (10, 12).

3. Procédé (100) selon la revendication 2,
dans lequel le dispositif de balayage (16) est configuré pour permettre une orientation flexible.

4. Procédé (100) selon la revendication 3,
dans lequel le dispositif de balayage (16) est configuré pour permettre un balayage à 360°.

5. Procédé (100) selon l'une des revendications précédentes,
dans lequel les caractéristiques requises sont au moins l'un parmi un espace radial, une rotation relative, une rectitude, des étapes, un désalignement, une forme et une épaisseur.

6. Procédé (100) selon l'une des revendications précédentes,
dans lequel le dispositif de balayage est au moins l'un parmi un laser rotatif, un laser linéaire, un laser d'inclinaison ou un radar laser.

7. Procédé (100) selon l'une des revendications précédentes,
dans lequel des données 3D d'au moins l'un des au moins deux composants creux (10, 12) sont fournies et prises en compte avant la sortie des données de balayage.

8. Procédé (100) selon l'une des revendications précédentes,
dans lequel les au moins deux composants creux sont des parties de fuselage d'un aéronef (80).

9. Système (50) pour déterminer en temps réel des caractéristiques requises pour la jonction d'au moins deux composants creux (10, 12) définissant au moins une zone de jonction (14) entre chacun des au moins deux composants creux (10, 12), en mesurant l'au moins une zone de jonction (14) dans une seule étape de mesure et relativement depuis l'intérieur d'un premier (10) des au moins deux composants creux (10, 12), comprenant :
au moins deux composants creux (10, 12) qui sont au moins partiellement dimensionnellement instables,
**caractérisé par**
un dispositif de balayage (16), dans lequel le dispositif de balayage (16) est arrangé d'une manière rigide à l'intérieur d'un premier (10) composant creux des au moins deux composants creux (10, 12),
dans lequel le dispositif de balayage (16) est adapté pour balayer l'au moins une zone de jonction (14) dans une seule étape de mesure pour recevoir des données de balayage afin de déterminer des caractéristiques requises pour la jonction, et
dans lequel le dispositif de balayage (16) est adapté pour sortir les données de balayage et les caractéristiques requises correspondantes pour la jonction des au moins deux composants creux (10, 12).

10. Système selon la revendication 9,
dans lequel les au moins deux composants creux (10, 12) sont des parties de fuselage d'un aéronef (80).
